# FASCICULE DE BREVET EUROPEEN

(11) **EP 1 587 044 B1**
(45) Date de publication et mention de la délivrance du brevet: **05.09.2018**
(21) Numéro de dépôt: 05290837.3
(22) Date de dépôt: 15.04.2005
(51) Int. Cl.: G08C 19/28, G07C 9/00

(54) **Procédé de transmission d'informations entre objets bidirectionnels**
Verfahren zur Datenübertragung zwischen bidirektionalen Gegenständen
Method for data transmission between bidirectional objects

(30) Priorité: 16.04.2004 FR 0403993
(43) Date de publication de la demande: 19.10.2005
(73) Titulaire: SOMFY, 74300 Cluses (FR)
(72) Inventeur: Autret, Capucine, 74460 Marnaz (FR); Orsat, Jean-Michel, 74300 Châtillon-sur-Cluses (FR); Pellarin, Florent, 74000 Annecy (FR)
(74) Mandataire: Verriest, Philippe

(56) Documents cités:
- EP-A- 0 651 119
- EP-A- 0 808 972
- WO-A-02/31778
- WO-A-97/25502
- WO-A-99/60530
- FR-A- 2 842 237
- US-A- 5 742 236
- US-A1- 2002 049 904

## Description

La présente invention se rapporte au domaine de la commande à distance d'actionneurs et notamment à la commande sans fil d'actionneurs utilisés dans un système domotique permettant le confort et la sécurité du bâtiment, par exemple pour l'éclairage, la manoeuvre des fermetures, des protections solaires, des systèmes de ventilation et d'air conditionné etc...

Dans la conception actuelle de tels systèmes, de tels actionneurs et/ou capteurs associés formant des récepteurs d'ordre, ou unités « esclaves », sont pilotés par des unités de contrôles ou points de commande formant des émetteurs d'ordres, ou unités « maîtres » ; toutefois, les actionneurs ou capteurs et les unités de commande sont capables de communiquer aussi bien en réception qu'en émission par un lien bidirectionnel, typiquement radiofréquences. Les actionneurs ou capteurs et les unités de commande peuvent donc être qualifiés de façon générique d'objets bidirectionnels. La communication directe par radiofréquences est également possible entre deux émetteurs d'ordres, de même qu'entre deux récepteurs d'ordres. Chaque élément est vu comme un point ou un noeud, dans le réseau de communication ainsi constitué. Les actionneurs ou capteurs sont souvent disposés dans des parties difficilement accessibles pour l'installateur, et plus encore pour l'utilisateur.

Les points de commande sont unidirectionnels ou bidirectionnels, nomades ou fixes. Bien souvent, un point de commande fixe est lui-même alimenté par piles, ce qui évite les câblages. Quand un point de commande est équipé d'un émetteur récepteur, la fonction réception peut n'être activée que sur commande ou par intermittence pour limiter la consommation.

L'appariement permet d'associer à un couple formé d'un actionneur et d'un point de commande un identifiant commun. Le partage d'un identifiant commun permet ensuite à l'actionneur de reconnaître les commandes provenant du point de commande, pour y répondre. L'appariement peut être répété pour commander plusieurs actionneurs à partir d'un point de commande ou encore pour qu'un actionneur réponde à plusieurs points de commande.

Du fait de l'existence d'actionneurs d'éléments de fermeture, il est important que la communication entre émetteurs d'ordres et récepteurs d'ordres soit authentifiée. Chaque élément du réseau comporte un identifiant qui lui est propre, et un identifiant propre à l'ensemble, identifiant désigné sous le nom de clé maison, ou clé commune. On trouve la description d'un tel système dans la demande de brevet WO-A-02 47038 ou encore dans la demande de brevet WO-A-03 081352 de la demanderesse.

Un émetteur d'ordres contient également la liste des identifiants de plusieurs récepteurs d'ordres auxquels il a été apparié, c'est-à-dire auxquels il est autorisé à donner des ordres, et qui sont prêts à exécuter de tels ordres. De manière à simplifier, on assimile ici à la liste des identifiants toute information relative au contrôle d'un récepteur d'ordre particulier par un émetteur d'ordre particulier. Il peut donc s'agir également d'une clé de cryptage propre à cette paire d'éléments ou toute donnée confidentielle utile à la transmission et ou l'exécution d'un ordre.

Pour permettre facilement à plusieurs utilisateurs d'utiliser les charges pilotées par les récepteurs d'ordres, sans avoir à reprendre toute une série d'appariements individuels, il est nécessaire de procéder au transfert de tout ou partie de ces informations confidentielles (clé maison, liste des identifiants...) depuis un émetteur d'ordres déjà inclus dans le réseau vers un nouvel émetteur d'ordres.

L'art antérieur propose plusieurs moyens de duplication directe entre émetteurs d'ordres.

Le brevet US-A-4 652 860 décrit un mode de transfert de l'information pour télécommandes d'ouverture de portes pour automobiles. La communication entre points de commandes se fait par exemple par infra-rouge, et à très courte distance (points de commande accolés). Le transfert est donc sécurisé, sans qu'il y ait possibilité pour un malfaiteur placé à distance de disposer de l'information transmise et de la dupliquer dans un émetteur d'ordres identique qui lui est propre à l'insu de l'utilisateur autorisé. Cependant, cette solution est coûteuse puisqu'elle fait intervenir des moyens de communication spécifiques à cette seule phase de duplication des informations d'un émetteur d'ordres vers un autre.

Dans le cas où l'on souhaite pouvoir utiliser économiquement un seul moyen de communication radiofréquences pour le transfert des informations confidentielles ou pour l'émission d'ordres vers les récepteurs d'ordres, il y a lieu de se prémunir contre le risque d'une réception des informations par un tiers mal intentionné. Le cas d'une réception des informations confidentielles au moment précis où celles-ci sont transférées est cependant infiniment peu probable sauf à avoir dissimulé dans la zone de portée un équipement très sophistiqué d'enregistrement, sur une longue période temporelle, de l'ensemble des informations transmises sur le réseau de communication. La duplication des informations d'une ancienne télécommande vers une nouvelle télécommande est en effet un événement rare.

La perte ou le vol d'une télécommande représente par contre un événement beaucoup plus fréquent.

La demande de brevet WO-A-03 081352 propose de réduire les conséquences d'un tel détournement par une procédure de modification de la clé maison, mais il s'agit là d'un remède et non d'une prévention.

Ce remède est néanmoins efficace et simple à mettre en oeuvre si la perte ou le vol sont détectés rapidement par le propriétaire des lieux. Le sachant, un malfaiteur qui aurait pu subtiliser un émetteur d'ordres donnant l'accès à la maison a tout intérêt à ce que la crainte d'un vol soit écartée, pour éviter que soit changée la clé maison. De ce fait il s'arrangera pour « restituer » l'émetteur d'ordres aussi rapidement que possible, afin qu'il soit vite retrouvé et qu'on puisse croire à une chute depuis la poche du propriétaire ou à un déplacement résultant d'une simple distraction.

Entre-temps, le malfaiteur a bien entendu dupliqué les codes confidentiels dans un émetteur d'ordres neuf, ou au moins vierge de clé, qu'il s'est procuré par ailleurs, et il aura tout loisir de revenir, éventuellement plusieurs semaines après les faits et en absence du propriétaire. Ce risque est d'autant plus à prendre en considération que les émetteurs d'ordres d'un même standard et utilisant le même protocole de communication se trouvent en vente libre.

Il y donc toujours un problème de sécurité lors du transfert de tout ou partie d'informations confidentielles entre objets bidirectionnels ainsi que de coûts dans la mise en oeuvre de tels transfert.

Pour cela l'invention propose un procédé de transfert d'informations selon la revendication 1.

Selon une variante, le troisième objet est un récepteur d'ordres. Le récepteur d'ordres peut alors commander un actionneur d'ouvrant ou d'écran mobile.

Selon une variante, le troisième objet est un troisième émetteur d'ordres.

Selon une variante, le procédé comprend en outre une étape préalable de désignation de troisième objet au cours de laquelle le troisième émetteur d'ordres émet une commande le désignant comme troisième objet pour les autres émetteurs d'ordres.

Selon une variante, au cours de l'étape de transfert, une partie des informations est transférée depuis le premier émetteur d'ordres vers le deuxième émetteur d'ordres via le troisième objet.

Selon une variante, au cours de l'étape de transfert, toutes les informations sont transférées depuis le premier émetteur d'ordres vers le deuxième émetteur d'ordres.

Selon une variante, le procédé comprend en outre une deuxième étape d'authentification. La deuxième étape d'authentification peut être une analyse d'une donnée biométrique d'un utilisateur, ou une analyse d'une action manuelle d'un utilisateur. Par exemple l'analyse est effectuée au sein du troisième objet.

Selon une variante, les informations sont des informations de configuration des objets tels qu'une clé commune et/ou un identifiant d'objet bidirectionnel.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un réseau domotique auquel s'applique l'invention ;
- figures 2 et 6, deux procédures d'authentification au sein de ce réseau ;
- figure 3, un mode de réalisation du procédé selon l'invention ;
- figures 4 et 5, décrit des variantes de transfert d'informations.

Dans la suite de la description, l'invention est décrite pour application à l'appariement de systèmes domotiques. On utilise dans la suite les mots « émetteurs d'ordres » et « récepteurs d'ordres » pour désigner des objets qui ont pour fonction d'émettre ou recevoir les ordres donnés par un utilisateur ; un émetteur d'ordres est aussi couramment appelé unité de commande, tandis qu'un récepteur d'ordres est un capteur commandant un actionneur d'ouvrant ou d'écran mobile. Ces désignations ne sont pas représentatives des fonctionnalités des « émetteurs » ou « récepteurs », qui du point de vue des signaux, sont capables d'émettre comme de recevoir. On peut donc parler « d'objets bidirectionnels », c'est-à-dire d'un objet présentant des capacités d'émission et de réception. Pour la clarté de l'explication, on utilise les mots « émetteurs » ou « récepteur » - qui ne représentent que l'affectation d'un objet bidirectionnel donné à un usage particulier.

Un objet bidirectionnel peut comprendre un étage d'initialisation apte à initialiser un transfert d'information vers les autres objets ou certains d'entre eux, un étage d'authentification, apte à authentifier des objets entrant en contact avec ledit objet et une unité logique pilotant l'étage d'initialisation et l'étage d'authentification. L'objet comprend aussi une mémoire, contenant les programmes mis en oeuvre dans l'unité logique et notamment les programmes d'exploitation de l'objet. Comme expliqué plus bas, la mémoire de l'objet peut aussi contenir au moins une clé commune; l'objet peut aussi contenir des informations d'appariement, par exemple des identifiants d'autres objets stockés dans la mémoire.

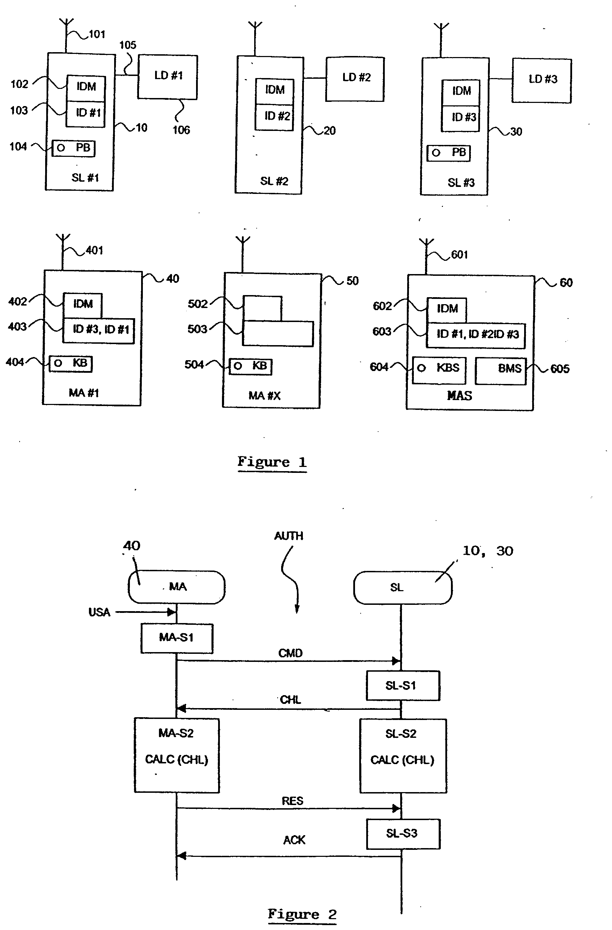

La figure 1 montre un réseau de communication domotique, dans lequel le procédé est mis en oeuvre. Le réseau comprend trois récepteurs d'ordres, ou esclaves SL, déjà installés dans le réseau domotique. Le récepteur d'ordres SL #1, désigné par 10, contient un moyen de communication radio bidirectionnel représenté par une antenne 101 et raccordé à une unité logique de traitement de type microcontrôleur dont on n'a représenté pour simplifier que deux emplacements mémoire 102 et 103. Le premier emplacement mémoire 102 contient la clé commune IDM, tandis que le deuxième emplacement mémoire 103 contient l'identifiant ID #1 propre au récepteur d'ordres 10.

Le récepteur d'ordres 10 peut contenir aussi un moyen d'entrée d'information 104. Ce moyen est par exemple un bouton poussoir, ou un interrupteur de fin de course, ou encore un capteur de présence ou un autre dispositif dont la fonction en fonctionnement normal peut différer de la fonction dans un mode particulier d'appariement ou de programmation. Tous les récepteurs d'ordres ne contiennent pas nécessairement le moyen d'entrée d'information 104. On verra qu'il est aussi possible que tous les récepteurs d'ordres contiennent ce moyen.

Enfin, le récepteur d'ordres 10 est susceptible d'activer une charge 106 notée LD #1, à laquelle il est relié par un lien filaire 105 transmettant les ordres de commande et/ou l'énergie électrique nécessaire à l'activation de la charge, telles qu'un volet roulant. La source d'énergie n'est pas représentée, de même les moyens de commutation électrique permettant l'alimentation de la charge.

Le récepteur d'ordres SL #2, désigné par 20, est identique au précédent à ceci près qu'il ne contient pas de moyen d'entrée d'information. Par ailleurs, le récepteur 20 comporte un identifiant différent ID #2, logé dans le deuxième emplacement mémoire. Le premier emplacement mémoire contient la même clé commune IDM que le récepteur d'ordres SL #1. Le récepteurs d'ordres SL #3, désigné par 30, est identique au récepteur d'ordres 10 à l'identifiant près : ID #3.

Sur la figure 1 sont aussi représentés un premier émetteur d'ordres MA #1, désigné par 40. L'émetteur d'ordres 40 contient un moyen de communication radio bidirectionnel représenté par une antenne 401 et raccordé à une unité logique de traitement de type microcontrôleur dont on n'a représenté pour simplifier qu'un troisième emplacement mémoire 402 et un quatrième emplacement mémoire 403. Le troisième emplacement mémoire 402 contient la clé commune IDM, tandis que le quatrième emplacement 403 mémoire contient l'ensemble des identifiants ID des récepteurs d'ordres obéissant à des ordres donnés par l'émetteur d'ordres MA #1.

A titre d'exemple, dans ce quatrième emplacement 403 mémoire figurent ici les identifiants ID #1 et ID #3, c'est-à-dire que l'émetteur d'ordres 40 est apte à commander séparément ou simultanément les charges LD #1 et LD #3 au moyen des récepteurs d'ordres 10 et 30. Par contre, cet émetteur d'ordres 40 n'est pas programmé pour agir sur la charge LD #2 par l'intermédiaire du récepteur d'ordres 20, puisque l'émetteur d'ordres ne comporte pas l'identifiant ID #2 dans l'emplacement 403. Cette configuration est bien entendu donnée à titre d'exemple.

L'émetteur d'ordres 40 peut contenir aussi un moyen d'entrée de commandes 404, par exemple un clavier KB raccordé au microcontrôleur.

Il est aussi représenté un second émetteur d'ordres MA #X, désigné par 50, d'un même type que le premier émetteur d'ordres. Mais le premier émetteur d'ordres 40 appartient déjà au réseau, tandis que le deuxième émetteur d'ordres 50 est un dispositif neuf, à installer dans le réseau. Aussi, le troisième emplacement mémoire 502 et le quatrième emplacement mémoire 503 sont donc vierges.

Pour décrire l'invention, on suppose que les droits de commande du deuxième émetteur d'ordres doivent devenir les mêmes que ceux du premier.

La figure 1 représente enfin un émetteur d'ordres d'un type particulier MAS, sous la référence 60. Cet émetteur d'ordres comprend, sous les références 601 à 603, les mêmes éléments décrits dans les émetteurs d'ordres précédents, mais il a ceci de particulier que, préférentiellement, il n'est pas utilisé en temps normal pour l'émission de commandes, mais il est plutôt rangé en un lieu sûr. Cet émetteur d'ordres contient la clé maison dans une troisième mémoire et préférentiellement, il contient dans une quatrième mémoire les identifiants de tous les récepteurs d'ordres, afin d'agir sur ceux-ci en cas de besoin. Il peut aussi avantageusement contenir un programme spécifique permettant d'inhiber toute fonction de réinitialisation des récepteurs d'ordres qui ne serait pas émise par cet émetteur d'ordres de type particulier, comme décrit dans la demande de brevet FR 0214093 de la demanderesse.

Afin d'éviter que cet émetteur d'ordres de type particulier ne soit confondu avec un autre, on peut lui donner une forme spécifique. Il peut enfin contenir un clavier spécifique 604 et/ou un capteur de reconnaissance biométrique 605.

La figure 2 décrit un exemple de processus d'authentification AUTH utilisé dans le réseau de communication lorsqu'une unité maître MA, ou émetteur d'ordres 40, veut faire exécuter une commande par une unité esclave SL, ou récepteur d'ordres 10, 30, selon la configuration du réseau. Le processus peut démarrer suite à une action USA, de l'utilisateur sur le clavier de l'émetteur d'ordres 40, ce qui a pour effet de provoquer l'émission d'une commande CMD à l'issue de l'étape d'initialisation MA-S1 sur l'émetteur d'ordres 40.

A réception de cette commande, le receveur d'ordres 10, 30 engage une première étape d'authentification SL-S1, dans laquelle il est évalué si la commande à exécuter nécessite authentification. Si oui, le récepteur 10, 30 choisit un nombre aléatoire CHL qu'il émet vers l'émetteur 40. Le récepteur 10, 30 engage alors une étape de calcul SL-S2 d'un résultat utilisant un algorithme particulier et le nombre aléatoire CHL. L'algorithme particulier dérive d'un algorithme général et de la clé maison : il est donc propre à tous les éléments appartenant au réseau. On voit au travers de la figure 2 que l'émetteur d'ordres 40 est aussi susceptible de recevoir des signaux et que le receveur d'ordres 10, 30 est aussi susceptible d'émettre des signaux.

Parallèlement, à réception du nombre aléatoire CHL, l'émetteur 40 engage à son tour une étape de calcul MA-S2 d'un résultat en utilisant le même algorithme et le nombre aléatoire CHL, et le résultat RES est émis vers le récepteur 10, 30 à la fin de l'étape de calcul MA-S2. A réception du résultat RES, l'unité esclave engage une étape de comparaison SL-S3 de RES avec son propre résultat. En cas de coïncidence, il y a émission d'un accusé de réception ACK vers l'émetteur 40, synonyme d'une authentification réussie.

Dans une version améliorée, le processus est répété en sens inverse de manière à procéder à une identification croisée. L'algorithme peut aussi dériver d'éléments préalablement échangés entre l'émetteur d'ordres et le récepteur d'ordres et devenir ainsi spécifique à chaque paire en présence.

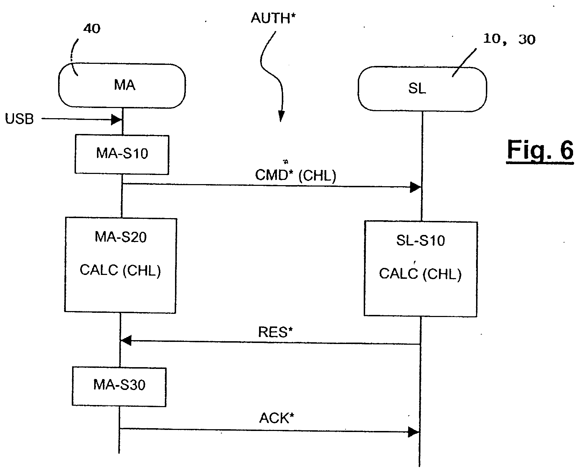

Dans certaines circonstances, le processus d'authentification peut aussi n'être réalisé que de manière inversée, c'est-à-dire que l'émetteur d'ordres 40 demande au récepteur d'ordres 10, 30 de s'authentifier, comme représenté en figure 6, selon le processus d'authentification AUTH*. Le processus est symétrique à celui de la figure 2. Le processus peut démarrer suite à une action USB, de l'utilisateur sur le clavier de l'émetteur d'ordres 40, ce qui a pour effet de provoquer l'émission d'une commande CMD* à l'issue de l'étape d'initialisation MA-S10 sur l'émetteur d'ordres 40. Dans ce cas, le nombre aléatoire CHL peut être transmis dans la commande CMD* de demande d'authentification. L'émetteur 40 engage alors une étape de calcul MA-S20 d'un résultat en utilisant un algorithme et le nombre aléatoire CHL. Parallèlement, à réception du nombre aléatoire CHL, le récepteur 10, 30 engage à son tour une étape de calcul SL-S10 d'un résultat utilisant le même algorithme particulier et le nombre aléatoire CHL, et le résultat RES* est émis vers l'émetteur 40 à la fin de l'étape de calcul SL-S10. A réception du résultat RES*, l'émetteur engage une étape de comparaison MA-S30 de RES* avec son propre résultat. En cas de coïncidence, il y a émission d'un accusé de réception ACK* vers le récepteur 10, 30, synonyme d'une authentification réussie.

La nature plus ou moins élaborée du processus d'authentification importe peu dans la compréhension de l'invention, l'important étant que ce procédé garantisse suffisamment l'identité de l'émetteur d'ordres et/ou du récepteur d'ordres.

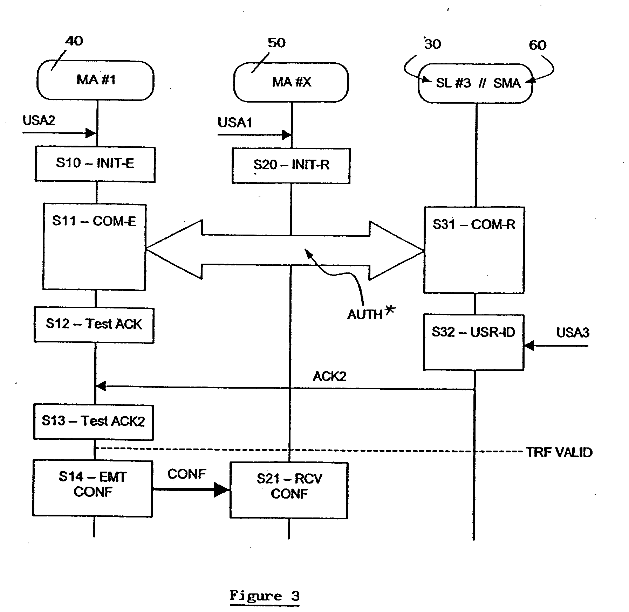

La figure 3 représente un mode de réalisation du procédé de transmission d'informations entre le premier émetteur d'ordres MA#1 référencé 40 et le deuxième émetteur d'ordres MA#X 50. Le procédé fait appel à un troisième objet bidirectionnel, qui est, selon le mode 1 ou 2 de réalisation, un récepteur d'ordres 30 ou un émetteur d'ordres 60 de type particulier. Le troisième objet est une tierce partie qui nécessite d'être en présence d'un objet du réseau pour effectuer le transfert. Ceci empêche par exemple de subtiliser l'émetteur 40, de transférer les informations en se déplaçant vers un lieu sûr, puis de restituer l'émetteur 40. Le transfert d'information ne peut donc être mis en oeuvre que dans un contexte particulier.

La suite du procédé sera donnée en référence au récepteur d'ordres 30 en tant que tierce partie, correspondant au premier mode de réalisation « Mode 1 ». Dans ce mode, le récepteur d'ordres 30 est adapté à recevoir des ordres de l'émetteur d'ordres 40.

Le procédé comprend une première étape d'authentification entre le premier émetteur d'ordres 40 et le troisième objet bidirectionnel 30 tel que le récepteur d'ordres 30. Cette étape est réalisée à l'étape S11 par le premier émetteur 40 et par l'étape S31 par le récepteur d'ordres 30. Cette étape d'authentification permet d'assurer la présence du récepteur d'ordres 30 avant qu'ait lieu le transfert des informations. Ceci permet d'éviter le transfert d'informations vers un objet bidirectionnel qui ne soit pas autorisé. L'étape d'authentification peut être réalisée selon la description faite de la figure 2. Préférentiellement, l'authentification inversée AUTH* de la figure 6 sera utilisée.

Le procédé comprend ensuite une étape de transfert d'informations CONF depuis le premier récepteur 40 vers le deuxième objet 50. Au cours de cette étape, les informations confidentielles de configuration de l'émetteur 40 sont transmises à l'émetteur 50 pour parvenir à la configuration de ce dernier. Sur la figure 3, l'étape de transfert est effectuée par le premier émetteur 40 à l'étape S14 d'émission EMT et est effectuée par le deuxième émetteur 50 à l'étape S21 de réception RCV. L'étape de transfert d'informations n'est exécutée que si l'étape d'authentification est réussie. Selon le processus d'authentification retenu, l'étape d'authentification est réussie si le premier récepteur d'ordres 40 est authentifié, ou en d'autres termes, si le premier émetteur 40 a été identifié et autorisé à transférer les informations qu'il détient ; de préférence, l'étape d'authentification est réussie si le récepteur d'ordres 30 est authentifié. Le transfert d'information permet de communiquer au deuxième émetteur 50 les informations détenues par le premier émetteur 40. Au cours de cette étape, tout ou partie des informations du premier émetteur 40 sont transférées depuis le premier émetteur 40 vers le deuxième émetteur 50. Ceci permet de s'affranchir de toute une série d'appariements individuels entre le deuxième émetteur 50 et les récepteurs d'ordres 10, 30 du réseau déjà appairés au premier émetteur 40. Grâce au transfert, on reproduit au sein du deuxième émetteur 50 la programmation effectuée sur le premier émetteur 40. On fournit ainsi à l'émetteur 50 les mêmes droits d'accès que ceux attribués à l'émetteur 40.

Par transfert, il peut s'agir d'une duplication ou d'une recopie d'informations d'un objet vers un autre. C'est le cas lorsqu'on souhaite disposer de plusieurs émetteurs commandant de la même manière le réseau. Il peut aussi s'agir d'une délocalisation d'informations, l'émetteur 40 perdant alors les informations transférées, et l'émetteur 50 devenant le seul objet susceptible de commander le réseau. C'est le cas lorsqu'on souhaite disposer d'un émetteur neuf et que l'ancien émetteur devienne obsolète.

Les informations peuvent être des informations de configuration des objets du réseau. Les informations de configuration permettent la reconnaissance de l'identité des objets (identifiant ID##) et la reconnaissance de l'appartenance des objets à un même réseau (clé maison ou commune IDM). Les informations transférées sont confidentielles en ce sens qu'elles permettent de commander le réseau. Elles permettent par exemple de commander l'ouverture d'ouvrants tels que des volets roulants ou une porte de garage, ce qui rend possible l'accès à une maison par exemple.

Le procédé comprend ensuite une étape de stockage des informations dans le deuxième émetteur 50. Cette étape a pour effet de rendre le deuxième émetteur 50 opérationnel, en ce sens que cet émetteur 50 devient appairé aux receveurs d'ordres 10, 30 auxquels le premier émetteur 40 était appairés. Sur la figure 1, le stockage se manifeste par le remplissage des emplacements mémoires 502 et 503 par les informations fournies par l'émetteur 40. En l'occurrence, l'emplacement mémoire 502 stocke la clé maison IDM et l'emplacement mémoire 503 stocke les identifiants ID#1 et ID#3 correspondants aux récepteurs 10 et 30.

Le procédé permet donc de transmettre les informations d'un émetteur vers un autre de manière sécurisée. Ceci est avantageux lorsque l'utilisateur souhaite se munir d'un nouvel émetteur car il peut ainsi lui-même appairer le nouvel émetteur avec les récepteurs du réseau de manière simple. L'utilisateur peut aussi souhaiter transférer les informations pour appairer un deuxième émetteur de sorte que deux utilisateurs puissent commander le réseau. La transmission est à moindre coût puisque les informations sont transmises entre les objets par des moyens déjà en place au sein des objets, à savoir par radiofréquences et non par l'implantation de moyens supplémentaires tels que par rayons infrarouges.

Pour améliorer l'efficacité de ce premier mode de réalisation « Mode 1 » dans lequel un récepteur d'ordres est utilisé comme tierce partie, il est préférable que le récepteur d'ordres 30 soit unique et disposé à l'intérieur de la maison. On peut supposer par exemple que seul un modèle particulier de récepteur d'ordres, contient le moyen d'entrée d'information 104.

Cependant, pour éviter différentes références de produits, et pour éviter que ce récepteur d'ordre particulier soit repérable, tous les récepteurs d'ordres peuvent être munis d'un tel moyen. Dans ce cas, une procédure matérielle ou logicielle est utilisée pour inhiber le moyen sur les récepteurs d'ordres accessibles depuis l'extérieur de l'habitation, ou encore pour l'inhiber sur tous les récepteurs d'ordres à l'exception d'un seul.

On peut aussi éviter cette procédure d'inhibition en enregistrant, dans chaque émetteur d'ordres appartenant au réseau, l'identifiant du récepteur d'ordres qui sera utilisé comme tierce partie. Cet enregistrement peut être réalisé dans une mémoire spécifique, ou encore, comme dans le cas de la figure 3, en ayant prédéterminé que le premier ID#3 des identifiants ID#3 et ID#1 contenus dans la quatrième mémoire 403 est celui du récepteur d'ordres 30 utilisé comme tierce partie. Ainsi, un seul récepteur d'ordres est sollicité lors des opérations de transfert, et le propriétaire des lieux est le seul à savoir lequel, ce qui renforce la sécurité du transfert. L'enregistrement de l'identifiant du récepteur d'ordres spécifique se traite par exemple comme une opération d'appariement, avec une manipulation spéciale du clavier de l'émetteur d'ordres.

Le procédé de transmission va maintenant être décrit de manière plus précise. Selon le mode de réalisation de la figure 3, le procédé débute par une première action de l'utilisateur USAI sur le deuxième émetteur d'ordres 50 afin d'engager une étape d'initialisation de réception sécurisée S-20 par le récepteur 50. L'action USAI est réalisée par exemple sous forme d'une manipulation particulière des touches du clavier 504. De façon semblable a lieu une deuxième action de l'utilisateur USA2 sur le premier émetteur d'ordres 40, de manière à initialiser le processus de transfert vers le deuxième émetteur 50, ce qui engage une étape d'initialisation d'émission sécurisée S-10 par l'émetteur 40. Une première étape d'authentification S-11 avec le récepteur d'ordres 30 est alors engagée. Pour le récepteur d'ordres 30, la première étape d'authentification est référencée S-31. Un premier signal d'acquisition ACK peut être émis par le récepteur d'ordres en cas de résultat positif lors de l'authentification ; ce signal peut être testé par le premier émetteur d'ordres 40 lors de l'étape S12.

Selon un mode de réalisation, l'étape d'authentification est du type croisé. Pour cela, non seulement le premier émetteur 40 est authentifié par le récepteur d'ordres 30, mais encore le récepteur 30 est authentifié par l'émetteur 40. Cette étape assure la présence et l'identité d'objets appartenant au réseau. Ceci permet de renforcer la sécurisation du transfert.

De manière avantageuse, le procédé comprend en outre une deuxième étape d'authentification. Cette deuxième étape peut être éventuellement mise en oeuvre que si la première étape d'authentification est réussie. En effet, il est avantageux de garantir la présence d'un récepteur d'ordre particulier, alors qu'en général le processus d'authentification est plutôt conçu pour valider l'identité d'un émetteur d'ordres. Il est donc possible que, pour des raisons de simplicité, le protocole utilisé n'implante pas des fonctions d'authentification inverse et/ou croisée. Pour se prémunir contre une telle lacune, et pour assurer un degré de sécurité supplémentaire, il est prévu un deuxième processus d'authentification. Ceci est représenté à l'étape de deuxième authentification S-32, étape dans laquelle est testée une troisième action de l'utilisateur USA3.

La deuxième étape d'authentification est, selon les variantes et modes de réalisation, plus ou moins élaborée. Il peut s'agir d'une analyse biométrique telle qu'une analyse d'empreinte digitale de l'utilisateur ; il peut s'agir d'une analyse d'une action manuelle d'un utilisateur, par exemple à l'aide du moyen d'entrée d'information du récepteur d'ordres 30, tel que son bouton poussoir PB. Ces analyses sont mises en oeuvre simplement. De préférence l'utilisateur agit sur la tierce partie. Ceci assure que l'utilisateur agisse physiquement sur la tierce partie ce qui empêche de transférer les informations dans un endroit ne comportant pas la tierce partie. Ceci contribue à renforcer la sécurité du procédé. Selon le degré de sécurité attendu, un code d'identification de l'utilisateur peut même être transmis par l'utilisateur à l'aide de ce moyen, mais le seul fait d'imposer une action simple sur un récepteur d'ordres prédéfini suffit déjà à se prémunir de la plupart des risques évoqués plus haut.

A l'issue de cette étape de deuxième authentification, un deuxième signal d'acquisition ACK2 peut être émis par le récepteur d'ordres 30 vers le premier émetteur d'ordres qui, après l'avoir testé lors de l'étape de deuxième test S-13, déclare le transfert valide si ce deuxième test est positif (l'authentification et l'acquisition inverses ou croisées sont possibles).

A ce stade, représenté par une ligne horizontale en trait en pointillés TRF VALID, l'étape de transfert d'informations confidentielles de configuration peut avoir lieu. Différentes variantes sont envisageables pour la réalisation des étapes de transfert et de stockage. Selon une première variante représentée sous le trait TRF VALID de la figure 1, une étape d'émission de configuration S-14 est engagée par le premier émetteur 40 d'ordres qui transfère sous forme d'un message CONF les informations confidentielles logées dans ses première 402 et deuxième 403 mémoires. Les informations sont alors stockées par le deuxième émetteur d'ordres 50 au cours de l'étape de réception de configuration S-21. Selon cette première variante, toutes les informations sont transférées directement de l'émetteur 40 vers l'émetteur 50. Les informations ne sont pas transmises via le troisième objet 30, 60. Cette variante permet d'éviter la programmation du troisième objet pour qu'il intervienne dans le transfert proprement dit des informations. Cette variante est une manière simple de transférer et stocker les informations.

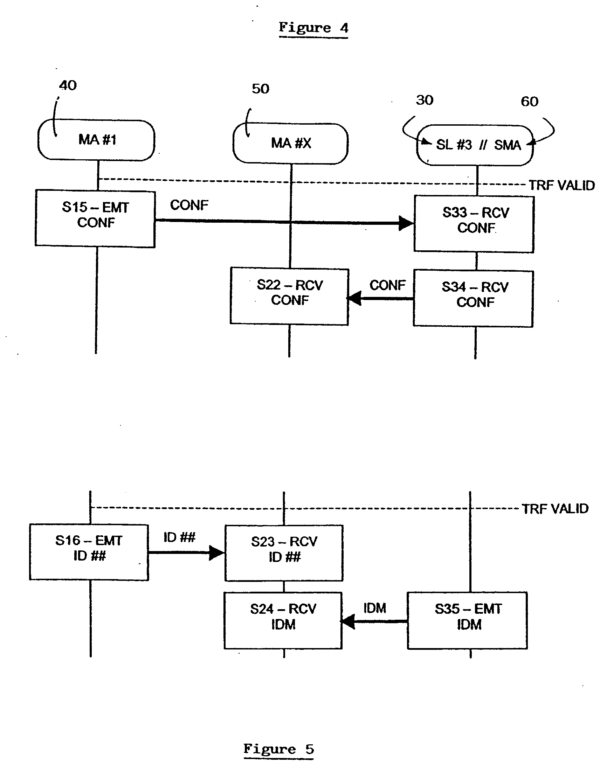

Les figures 4 et 5 montrent une deuxième et une troisième variantes du transfert et du stockage des informations. Sur les figures 4 et 5 sont représentés les trois objets 30, 40, 50, 60 ainsi que le trait en pointillés TRF VALID indiquant que l'ensemble du procédé de la figure 3 est identique jusqu'au trait, et qu'il varie ensuite.

La figure 4 représente une deuxième variante dans laquelle le récepteur d'ordres 30 ayant servi de tierce partie joue également le rôle de relais pour l'ensemble de l'information à transférer dans l'émetteur d'ordres 50. Une étape d'émission de configuration S-15 est engagée par le premier émetteur 40 d'ordres qui transfert sous forme d'un message CONF les informations confidentielles logées dans ses première 402 et deuxième 403 mémoires. Cette variante se caractérise par le fait que le récepteur 30 reçoit toutes les informations, et ce, à l'étape S33. Une étape d'émission de configuration S34 est alors engagée par le récepteur 30 sous la forme d'un message CONF, pour transférer à nouveau les informations vers l'émetteur 50. Les informations sont alors stockées par le deuxième émetteur d'ordres 50 au cours de l'étape de réception de configuration S-22. L'avantage de cette variante est qu'elle renforce la sécurité du procédé de transmission puisque les étapes de transfert et de stockage doivent être faites en présence du troisième objet, ce qui interdit la subtilisation de l'émetteur 40 hors de la maison pour le transfert et le stockage des informations.

La figure 5 représente une deuxième variante dans laquelle le récepteur d'ordres 30 ayant servi de tierce partie joue également le rôle de relais pour une partie des informations à transférer dans l'émetteur d'ordres 50. Une étape d'émission S-16 est engagée par le premier émetteur 40 d'ordres qui transfère seulement une partie des informations. Dans l'exemple de la figure 5, il s'agit des informations relatives aux identifiants des récepteurs d'ordres 10, 30 avec lesquels l'émetteur 40 est appairé. Les informations relatives aux identifiants sont alors stockées par le deuxième émetteur d'ordres 50 au cours de l'étape de réception de configuration S-23. Par ailleurs, une étape d'émission S-35 est engagée par le troisième objet 30 qui transfère seulement l'autre partie des informations. Dans l'exemple de la figure 5, il s'agit des informations relatives à la clé maison IDM. Les informations relatives à la clé maison IDM sont alors stockées par le deuxième émetteur d'ordres 50 au cours de l'étape de réception de configuration S-24. Bien entendu, les informations transférées par le premier émetteur 40 et par le troisième objet 30 peuvent être inversées. L'avantage de cette variante est qu'elle est sûre et simple puisque que d'une part les étapes de transfert et de stockage doivent être faites en présence du troisième objet, et d'autre part, chacun des émetteur 40 et troisième objet 30 transfère simplement des informations présentes dans l'un de ses emplacements mémoire.

Le deuxième mode de réalisation « Mode 2 » du procédé consiste à prendre un émetteur d'ordres comme tierce partie. Il est tout à fait possible de prendre un émetteur d'ordres de type standard, c'est-à-dire semblable au premier ou au deuxième émetteur d'ordres, mais, de manière préférée, on choisira un émetteur d'ordres spécifique MAS comme précédemment décrit et représenté en figure 1 sous la référence 60.

Le procédé est semblable à celui décrit par les figures 3, 4, 5 mais selon le choix « Mode 2 » dans lequel l'émetteur d'ordres de type particulier MAS sert de tierce partie. Pour le reste, les étapes du procédé sont strictement identiques à celles du premier mode.

Un avantage d'un tel choix d'émetteur d'ordres de type particulier est qu'il évite de prévoir un moyen d'entrée d'informations sur les récepteurs d'ordres, et que d'une façon générale, il permet d'éviter de pénaliser le coût de l'ensemble des récepteurs d'ordres par l'ajout éventuel des moyens permettant une deuxième authentification.

Du fait que l'émetteur d'ordres de type particulier MAS est en principe unique dans l'installation, il peut contenir des éléments élaborés tels un clavier spécial KBS comportant un plus grand nombre de touches qu'un émetteur d'ordres normal, ce qui facilite l'entrée d'un code confidentiel par l'utilisateur, et/ou il peut contenir un capteur de reconnaissance biométrique de manière à garantir une grande sécurité d'utilisation.

L'usage d'émetteur d'ordres de type particulier peut survenir après que l'installation fonctionne déjà de manière non sécurisée. Par exemple, les émetteurs d'ordres sont normalement duplicables comme dans l'art antérieur jusqu'à ce qu'ils reçoivent un ordre particulier qui ne peut être émis que par un émetteur de type particulier et qui ne sera pris en considération par les émetteurs d'ordres de l'installation que si l'émetteur de type particulier contient la clé commune. A réception de cet ordre particulier, les émetteurs d'ordres de l'installation cessent d'être duplicables comme dans l'art antérieur et le deviennent selon le deuxième mode de réalisation de l'invention, la tierce partie étant l'émetteur d'ordres de type particulier qui a émis l'ordre particulier.

Dans le cas de l'usage de l'émetteur d'ordre de type particulier MAS, il est aussi envisageable que le procédé comprenne une étape préalable de désignation de troisième objet. Au cours de cette étape le troisième émetteur d'ordres 60 de type particulier émet une commande le désignant comme troisième objet pour les autres émetteurs d'ordres 40, 50. Cette étape est particulièrement avantageuse dans le cas où l'usage d'émetteur d'ordres de type particulier survient après que l'installation fonctionne déjà de manière non sécurisée. Dans ce cas, l'identifiant du troisième émetteur d'ordres est enregistré dans une mémoire spécifique ou encore comme premier identifiant stocké dans la quatrième mémoire 403 de chaque émetteur d'ordres appartenant déjà au réseau. Il est aussi envisageable que l'objet servant de tierce partie soit un objet « universel » ; il s'agit par exemple d'un objet bidirectionnel de programmation en possession d'un vendeur ou d'un installateur permettant la mise en oeuvre du procédé de transfert d'information. Néanmoins, ce type d'objet n'est en aucun cas dans le commerce.

L'invention se rapporte aussi au réseau de communication ci-dessus qui comprend les objets bidirectionnels mentionnés ci-dessus, deux des objets pouvant être des émetteurs d'ordres. Dans ce réseau, on peut transférer des informations de l'un des émetteurs vers l'autre, par intervention du troisième objet, selon le procédé décrit. L'un des émetteurs stocke les informations reçues. Le transfert a lieu de manière sécurisé au sein du réseau.

L'invention se rapporte aussi à un émetteur d'ordre bidirectionnel, tel que l'émetteur 40. L'émetteur peut comprendre une routine d'initialisation de transfert d'information. Par cette routine, l'objet est dans un état de mise en oeuvre du procédé décrit ci-dessus. L'émetteur comprend une routine d'authentification avec un autre objet bidirectionnel, permettant le contrôle de la présence et de l'identité des objets acteurs dans le procédé de transfert. Ledit autre objet est la tierce partie précédemment décrite, qui peut être un émetteur ou un récepteur d'ordres. L'émetteur comprend aussi une routine de transfert d'informations vers un autre émetteur d'ordres bidirectionnel, la routine de transfert étant susceptible d'être mise en oeuvre que si la routine d'authentification est positive ou réussie. Par ailleurs, L'émetteur d'ordres 40 peut contenir une mémoire 403 mémorisant un identifiant de l'objet bidirectionnel avec lequel la routine d'authentification est mise en oeuvre.

L'émetteur est en particulier prévu pour transmettre des informations, telle qu'une clé commune ou un identifiant d'objet bidirectionnel, uniquement selon le procédé décrit. Par ailleurs, les routines décrites précédemment peuvent faire partie d'un programme d'exploitation de l'émetteur d'ordres 40.

Bien entendu, l'invention n'est pas limitée aux modes de réalisation donnés plus haut. La transmission radio utilisée entre un émetteur et un récepteur n'est donnée qu'à titre d'exemple et peut être modifiée. L'invention s'applique notamment, que les émetteurs et les récepteurs utilisent une fréquence unique ou émettent chacun sur une fréquence distincte, ou par sauts de fréquences, ou avec des modulations différentes. Le procédé s'applique dès lors que les émetteurs ou récepteurs d'ordres sont des "objets bidirectionnels" capables d'émettre et de recevoir.

On peut manifestement coder ou crypter les messages ou les identifiants, en utilisant les techniques connues de l'état de la technique.

## Revendications

1. Procédé de transfert d'informations de configuration dans un réseau de communication domotique depuis un premier émetteur d'ordres bidirectionnel (40) dudit réseau de communication vers un deuxième émetteur d'ordres bidirectionnel (50), le premier émetteur d'ordres étant appairé à au moins un récepteur d'ordres dudit réseau de communication pour commander à distance une charge au moyen du récepteur d'ordres ainsi qu'à un troisième objet (30,60) bidirectionnel dudit réseau de communication, le procédé comprenant les étapes successives suivantes :
- authentification entre le premier émetteur d'ordres (40) et ledit troisième objet bidirectionnel (30, 60) dudit réseau de communication, ladite authentification utilisant un algorithme particulier propre audit réseau de télécommunication, ledit algorithme dérivant d'un algorithme général et d'une clé commune appartenant audit réseau de communication, puis, si l'authentification est réussie
- transfert d'informations de configuration depuis le premier émetteur d'ordres (40) vers le deuxième émetteur d'ordres (50),
- stockage des informations de configuration dans le deuxième émetteur d'ordres (50), le deuxième émetteur d'ordres devenant appairé audit au moins un récepteur d'ordres auquel le premier émetteur d'ordres est appairé, pour commander à distance une charge au moyen du récepteur d'ordres.

2. Le procédé selon la revendication 1, **caractérisé en ce que** le troisième objet (30) est un récepteur d'ordres.

3. Le procédé selon la revendication 2, **caractérisé en ce que** le récepteur d'ordres (30) commande un actionneur d'ouvrant ou d'écran mobile.

4. Le procédé selon la revendication 1, **caractérisé en ce que** le troisième objet (60) est un troisième émetteur d'ordres.

5. Le procédé selon la revendication précédente, **caractérisé en ce que** le procédé comprend en outre une étape préalable de désignation de troisième objet au cours de laquelle le troisième émetteur d'ordres (60) émet une commande le désignant comme troisième objet pour les autres émetteurs d'ordres (40, 50).

6. Le procédé selon l'une des revendications précédentes, **caractérisé en ce qu'**au cours de l'étape de transfert, une partie des informations est transférée depuis le premier émetteur d'ordres (40) vers le deuxième émetteur d'ordres (50) via le troisième objet (30, 60).

## Patentansprüche

1. Verfahren zum Übertragen von Konfigurationsinformationen in einem Domotik-Kommunikationsnetz von einem ersten bidirektionalen Befehlssender (40) des Kommunikationsnetzes zu einem zweiten bidirektionalen Befehlssender (50), wobei der erste Befehlssender mit mindestens einem Befehlsempfänger des Kommunikationsnetzes verknüpft ist, um eine Last mittels des Befehlsempfängers fernzusteuern, sowie mit einem dritten bidirektionalen Objekt (30, 60) des Kommunikationsnetzes, wobei das Verfahren die folgenden aufeinanderfolgenden Schritte umfasst:
- Authentifizieren des Kommunikationsnetzes zwischen dem ersten Befehlssender (40) und dem dritten bidirektionalen Objekt (30, 60), wobei das Authentifizieren einen besonderen Algorithmus verwendet, der dem Telekommunikationsnetz eigen ist, wobei sich der Algorithmus aus einem allgemeinen Algorithmus und einem gemeinsamen Schlüssel ableitet, die zum Kommunikationsnetz gehören, danach, wenn die Authentifizierung gelungen ist
- Übertragen von Konfigurationsinformationen vom ersten Befehlssender (40) zum zweiten Befehlssender (50),
- Speichern der Konfigurationsinformationen im zweiten Befehlssender (50), wobei der zweite Befehlssender mit dem mindestens einen Befehlsempfänger verknüpft wird, mit dem der erste Befehlssender verknüpft ist, um eine Last mittels des Befehlsempfängers fernzusteuern.

2. Verfahren nach Anspruch 1, **dadurch gekennzeichnet, dass** das dritte Objekt (30) ein Befehlsempfänger ist.

3. Verfahren nach Anspruch 2, **dadurch gekennzeichnet, dass** der Befehlsempfänger (30) einen Aktor für Fenster/Türen oder eine bewegliche Abschattung steuert.

4. Verfahren nach Anspruch 1, **dadurch gekennzeichnet, dass** das dritte Objekt (60) ein dritter Befehlssender ist.

5. Verfahren nach dem vorstehenden Anspruch, **dadurch gekennzeichnet, dass** das Verfahren weiter einen vorhergehenden Schritt des Festlegens des dritten Objekts umfasst, in dessen Verlauf der dritte Befehlssender (60) einen Befehl sendet, der ihn als drittes Objekt für die anderen Befehlssender (40, 50) festlegt.

6. Verfahren nach einem der vorstehenden Ansprüche, **dadurch gekennzeichnet, dass** im Laufe des Übertragungsschritts ein Teil der Informationen vom ersten Befehlssender (40) zum zweiten Befehlssender (50) über das dritte Objekt (30, 60) übertragen wird.

## Claims

1. A method for transferring configuration information in a home automation communication network from a first bidirectional command transmitter (40) of said communication network to a second bidirectional command transmitter (50), the first command transmitter being paired with at least one command receiver of said communication network for remotely controlling a load by means of the command receiver as well as with a third bidirectional object (30, 60) of said communication network, the method comprising the following successive steps:
- authenticating, between the first command transmitter (40) and said third bidirectional object (30, 60), said communication network, said authentication using a particular algorithm specific to said telecommunication network, said algorithm being derived from a general algorithm and from a common key belonging to said communication network, then, if the authentication is successful,
- transferring configuration information from the first command transmitter (40) to the second command transmitter (50),
- storing configuration information in the second command transmitter (50), the second command transmitter becoming paired with said at least one command receiver with which the first command transmitter is paired, for remotely controlling a load by means of the command receiver.

2. The method according to claim 1, **characterized in that** the third object (30) is a command receiver.

3. The method according to claim 2, **characterized in that** the command receiver (30) controls a door leaf or a movable screen actuator.

4. The method according to claim 1, **characterized in that** the third object (60) is a third command transmitter.

5. The method according to the preceding claim, **characterized in that** the method further comprises a prior step of designating a third object during which the third command transmitter (60) emits a control designating it as a third object for the other command transmitters (40, 50).

6. The method according to any of the preceding claims, **characterized in that** during the transfer step, part of the information is transferred from the first command transmitter (40) to the second command transmitter (50) via the third object (30, 60).
